# EUROPEAN PATENT SPECIFICATION

(11) **EP 2 916 597 B1**
(45) Date of publication and mention of the grant of the patent: **07.11.2018**
(21) Application number: 15150699.5
(22) Date of filing: 03.06.2011
(51) Int. Cl.: H04W 52/02

(54) **Method, apparatus and system for configuring an energy-saving cell**
Verfahren, Vorrichtung und System zur Konfigurierung einer energiesparenden Zelle
Procédé, appareil et système de configuration d'une cellule à économie d'énergie

(30) Priority: 17.08.2010 CN 201010255446
(43) Date of publication of application: 09.09.2015
(62) Divisional of application: 11786127.8
(73) Proprietor: Huawei Technologies Co., Ltd., Longgang District Shenzhen, Guangdong 518129 (CN)
(72) Inventor: Deng, Tianle, 518129 Shenzhen (CN); Tang, Binsong, 518129 Shenzhen (CN); Yang, Li, 518129 Shenzhen (CN); Zhang, Hongzhuo, 518129 Shenzhen (CN)
(74) Representative: Kreuz, Georg Maria

(56) References cited:
- US-A1- 2009 252 075
- US-A1- 2010 172 311
- US-A1- 2010 182 903

## Description

### FIELD OF THE INVENTION

The present invention relates to the field of mobile communication technologies, and in particular, to a technology of configuring an energy-saving cell.

### BACKGROUND OF THE INVENTION

In a Long Term Evolution (LTE) system or Long Term Evolution-Advanced (LTE-A) system, certain sub-frame of a radio frame may be configured as a Multicast Broadcast Single Frequency Network (MBSFN) sub-frame. The MBSFN sub-frame may be an idle sub-frame, namely, a serviceless MBSFN sub-frame; the MBSFN sub-frame may also be a non-idle sub-frame, namely, an MBSFN sub-frame used for transmitting services.

Because Common Reference Signals (CRSs) of an MBSFN sub-frame are less than the CRSs of an ordinary sub-frame (such as a unicast sub-frame), the transmission time is reduced. Meanwhile, when no CRS needs to be sent, a Power Amplifier (PA) in the corresponding Packet Switched (PS) domain may be shut down to save power, thereby saving energy.

However, after the MBSFN sub-frame is configured in the system, the service sub-frame resources are more centralized. Therefore, with the MBSFN sub-frame being used to save energy of the system, if all neighboring cells are using MBSFN sub-frame to save energy, the probability of generating interference at the edge of the cell increases, and the spectrum efficiency is reduced.

US 2009/252075 A1 discloses a method for wireless communication, wherein an interference between overhead channels, like synchronization channels, intended to be sent to different UEs (User Equipments) from selected eNBs (evolved Node Bs) is reduced by sending overhead channels from different eNBs in non-overlapping time intervals and/or reducing the transmit power of interfering eNB during the time intervals in which the overhead channels are sent by neighbor eNBs. In one design, sub-frame offset is used to mitigate interference on overhead channels sent in only some of the sub-frames. With sub-frame offset, the frame timing of an eNB is shifted by an integer number of sub-frames with respect to the frame timing of another eNB. And the frame timing may be offset by multiple sub-frames or a fraction of a sub-frame (e.g., a slot). In another design, an eNB may reduce interference by designating a sub-frame as an MBSFN sub-frame. The eNB may send only control information in a small part (e.g., in symbol period 0) of the MBSFN sub-frame and may avoid sending data and reference signals in the remaining part of the MBSFN sub-frame. The control information may identify the sub-frame as an MBSFN sub-frame and/or may provide other information.

US 2010/182903 A1 discloses a method for wireless communication, wherein an overload indicator for a cell may be transmitted over MBSFN sub-frames which include fewer or no reference signals thereby reducing the interference between cells.

### SUMMARY OF THE INVENTION

The subject matter of the invention is defined by the appended claims. Further aspects are described in the following for supporting the understanding of the invention, however the embodiments and/or examples of the following description which are not covered by the appended claims are considered as not being part of the present invention.

In one aspect, the present invention provides a method for configuring an energy-saving cell, where the method includes:
obtaining, by a network node, information for configuring a serviceless Multicast Broadcast Single Frequency Network (MBSFN) sub-frame of an energy-saving cell; and configuring, by the network node, a serviceless MBSFN sub-frame of a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

In another aspect, the present invention provides a base station, including: an obtaining unit, configured to obtain information for configuring a serviceless Multicast Broadcast Single Frequency Network (MBSFN) sub-frame of an energy-saving cell; and a configuring unit, configured to configure a serviceless MBSFN sub-frame of a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

In another aspect, the present invention provides a centralized control device, including: a receiving unit, configured to receive information for configuring a serviceless Multicast Broadcast Single Frequency Network (MBSFN) sub-frame of an energy-saving cell from a base station; and a configuring unit, configured to configure a serviceless MBSFN sub-frame for a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

In another aspect, the present invention provides a system for configuring an energy-saving cell. The system includes the centralized control device and a base station of the energy-saving cell, wherein: the base station of the energy-saving cell is configured to send information for configuring a serviceless Multicast Broadcast Single Frequency Network (MBSFN) sub-frame of the energy-saving cell to the centralized control device.

In the foregoing technical solution, the serviceless MBSFN sub-frame of the neighboring cell alternate with the serviceless MBSFN sub-frame of the energy-saving cell, thereby reducing interference between cells and improving stability of the system.

### BRIEF DESCRIPTION OF THE DRAWINGS

FIG. 1 is a flowchart of a method for configuring an energy-saving cell according to an embodiment of the present invention;
FIG. 2 is a schematic structure diagram of a system according to an embodiment of the present invention;
FIG. 3 is a flowchart of a method for configuring an energy-saving cell according to another embodiment of the present invention;
FIG. 4a-4c are schematic diagrams of configuring a sub-frame in a cell according to an embodiment of the present invention;
FIG. 5 is a flowchart of a method for configuring an energy-saving cell according to another embodiment of the present invention;
FIG. 6 is a flowchart of a method for configuring an energy-saving cell according to another embodiment of the present invention;
FIG. 7 is a schematic diagram of configuring a sub-frame in a cell according to another embodiment of the present invention;
FIG. 8 is a schematic structure diagram of a base station according to an embodiment of the present invention;
FIG. 9 is a schematic structure diagram of a centralized control device according to an embodiment of the present invention; and
FIG. 10 is a schematic diagram of a system for configuring an energy-saving cell according to an embodiment of the present invention.

### DETAILED DESCRIPTION OF THE EMBODIMENTS

The following describes embodiments of the present invention in detail with reference to accompanying drawings.

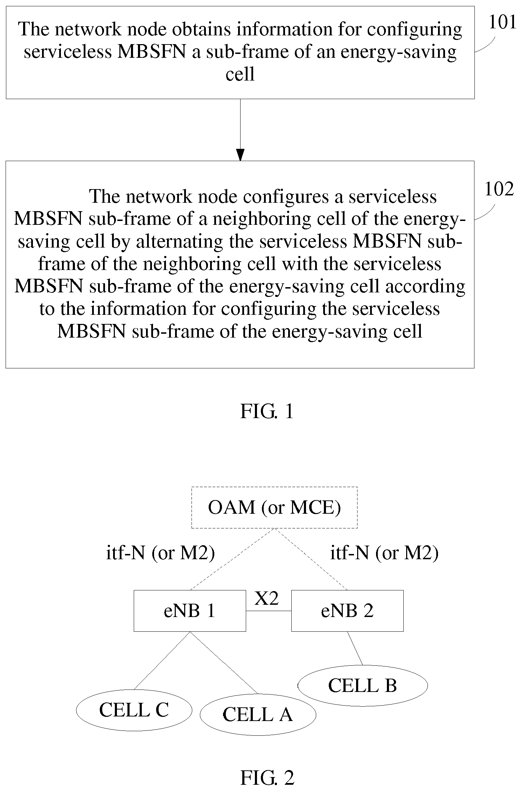

As shown in FIG. 1, a method for configuring an energy-saving cell in an embodiment of the present invention includes the following steps.

101: A network node obtains information for configuring a serviceless MBSFN sub-frame of an energy-saving cell.

102: The network node configures serviceless MBSFN a sub-frame of a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

In an embodiment of the present invention, the alternating the serviceless MBSFN sub-frame of the neighboring cell with the serviceless MBSFN sub-frame of the energy-saving cell includes the following configuration: The serviceless MBSFN sub-frame of the neighboring cell never overlap, or partly overlap, the serviceless MBSFN sub-frame of the energy-saving cell.

In another embodiment, the method may further include the following steps. A base station of the energy-saving cell sends Time division interference Overload Indicator (TOI) information to the network device after detecting that interference exceeds a preset threshold, or the base station of the energy-saving cell sends Time division High Interference Indication (THII) information to the network device if the energy-saving cell uses a high-interference sub-frame. After receiving the TOI information and/or THII information sent by the base station of the energy-saving cell, the network device configures the serviceless MBSFN sub-frame of the neighboring cell according to the received information for configuring the serviceless MBSFN sub-frame of the energy-saving cell.

Optionally, when the serviceless MBSFN sub-frame of the energy-saving cell changes, the base station of the energy-saving cell sends a notification message to the network device, where the notification message is used for indicating the change of the serviceless MBSFN sub-frame of the energy-saving cell. The change of the serviceless MBSFN sub-frame of the energy-saving cell includes: increasing or decreasing the serviceless MBSFN sub-frame of the energy-saving cell; and the decreasing of the serviceless MBSFN sub-frame of the energy-saving cell includes: sending a Multicast Broadcast Media Service (MBMS) in the serviceless MBSFN sub-frame of the energy-saving cell, or configuring the serviceless MBSFN sub-frame of the energy-saving cell as a unicast sub-frame or other service sub-frame.

In the method for configuring the energy-saving cell, the serviceless MBSFN sub-frame of the neighboring cell alternate with the serviceless MBSFN sub-frame of the energy-saving cell, thereby reducing interference between cells and improving stability of the system.

The network node in the foregoing embodiment includes a base station of the neighboring cell of the energy-saving cell or a centralized control device. When the network node is a base station of the neighboring cell of the energy-saving cell, the base station of the neighboring cell of the energy-saving cell obtains information for configuring the serviceless MBSFN sub-frame of the energy-saving cell, and configures the serviceless MBSFN sub-frame of the neighboring cell by alternating the serviceless MBSFN sub-frame of the neighboring cell with the serviceless MBSFN sub-frame of the energy-saving cell according to the information for configuring the serviceless MBSFN sub-frame of the energy-saving cell.

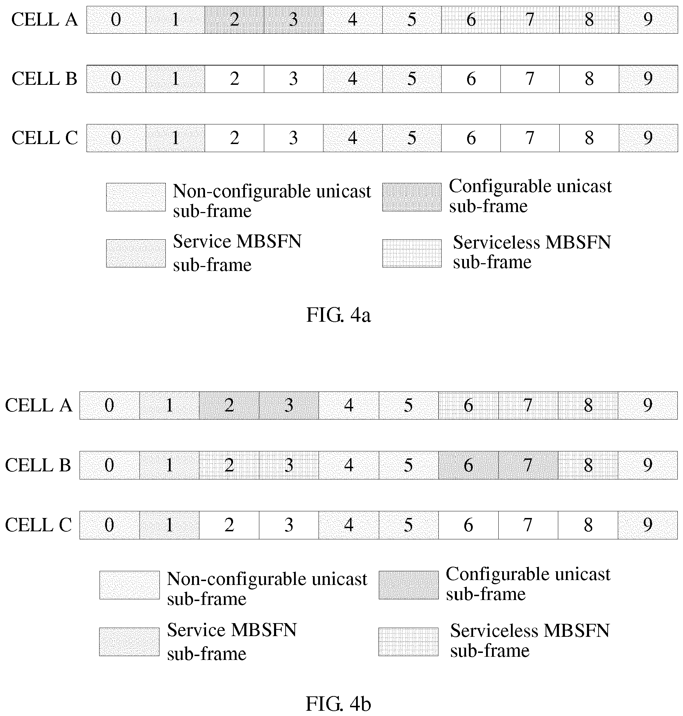

The following describes the method for configuring the energy-saving cell, supposing that cell A and cell C are under the same base station, for example, evolved NodeB (eNB)1, and cell B is under eNB2, as shown in FIG. 2. In this embodiment, cell A, cell B, and cell C are adjacent to one another; and cell A is an energy-saving cell for which a serviceless MBSFN sub-frame is configured. As shown in FIG. 4a, in cell A, cell B, and cell C, sub-frame 0, sub-frame 4, sub-frame 5, and sub-frame 9 are non-configurable unicast sub-frames, and sub-frame 1 is a sub-frameservice MBSFN sub-frame. eNB1 configures sub-frame 6, sub-frame 7, and sub-frame 8 of cell A as serviceless MBSFN sub-frames, and configures sub-frame 2 and sub-frame 3 as configurable unicast sub-frames.

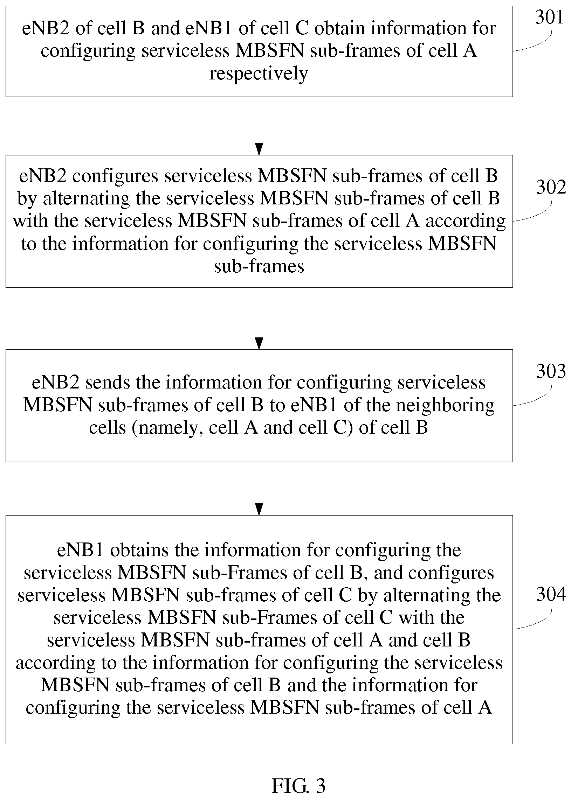

As shown in FIG. 3, the method for configuring an energy-saving cell in this embodiment specifically includes the following steps:
301: eNB2 of cell B and eNB1 of cell C obtain information for configuring serviceless MBSFN sub-frames of cell A respectively.

Specifically, eNB2 of cell C may obtain information for configuring serviceless MBSFN sub-frames of cell A, where the information is sent by eNB1 through an X2 interface and may be "MBSFN sub-frame info", for example. In other words, eNB1 sends the information for configuring the serviceless MBSFN sub-frames of cell A to eNB2 in the neighboring cell "cell B" through the X2 interface, and notifies eNB2 that sub-frame 6, sub-frame 7, and sub-frame 8 in cell A are serviceless MBSFN sub-frames. Meanwhile, because cell A and cell C are under the same eNB, the process of eNB1 of cell C obtaining the information for configuring the serviceless MBSFN sub-frames of cell A may be regarded as being implemented inside eNB1. For example, eNB1 reads the locally stored information for configuring serviceless MBSFN sub-frames of cell A.

Optionally, after eNB1 configures serviceless MBSFN sub-frames of energy-saving cell A, as shown by dotted lines in FIG. 2, eNB2 may obtain information for configuring serviceless MBSFN sub-frames of cell A from eNB1 through the X2 interface, or an S1 interface, or an M2 interface, or an itf-N interface. Specifically, eNB1 may transmit the information for configuring the serviceless MBSFN sub-frames of cell A to eNB2 through the itf-N interface or the M2 interface, that is, through the itf-N interface, the information for configuring the serviceless MBSFN sub-frames of cell A, which is sent by eNB1, may be forwarded by an Operation Administration Maintenance (OAM) system to eNB2; and, through the M2 interface, the information for configuring the serviceless MBSFN sub-frames of cell A, which is sent by eNB1, may be forwarded by a Multi-cell/multicast Coordination Entity (MCE) to eNB2. Optionally, through the S1 interface, the information for configuring the serviceless MBSFN sub-frames of cell A, which is sent by eNB1, may be forwarded by a Mobility Management Entity (MME) to eNB2.

302: eNB2 configures serviceless MBSFN sub-frames of cell B by alternating the serviceless MBSFN sub-frames of cell B with the serviceless MBSFN sub-frames of cell A according to the information for configuring the serviceless MBSFN sub-frames.

Specifically, as shown in FIG. 4b, eNB2 may configure sub-frame 2, sub-frame 3, and sub-frame 8 in cell B as serviceless MBSFN sub-frames, and configure sub-frame 6 and sub-frame 7 as configurable unicast sub-frames, according to the information for configuring the serviceless MBSFN sub-frames of cell A. In this case, the serviceless MBSFN sub-frames numbered 6, 7, and 8 in cell A partly alternate with the serviceless MBSFN sub-frames numbered 2, 3, and 8 in cell B (only sub-frame 8 overlaps).

303: eNB2 sends the information for configuring the serviceless MBSFN sub-frames of cell B to eNB1 of the neighboring cells (namely, cell A and cell C) of cell B.

304: eNB1 obtains the information for configuring the serviceless MBSFN sub-frames of cell B, and configures serviceless MBSFN sub-frames of cell C by alternating the serviceless MBSFN sub-frames of cell C with the serviceless MBSFN sub-frames of cell A and cell B according to the information for configuring the serviceless MBSFN sub-frames of cell B and the information for configuring the serviceless MBSFN sub-frames of cell A.

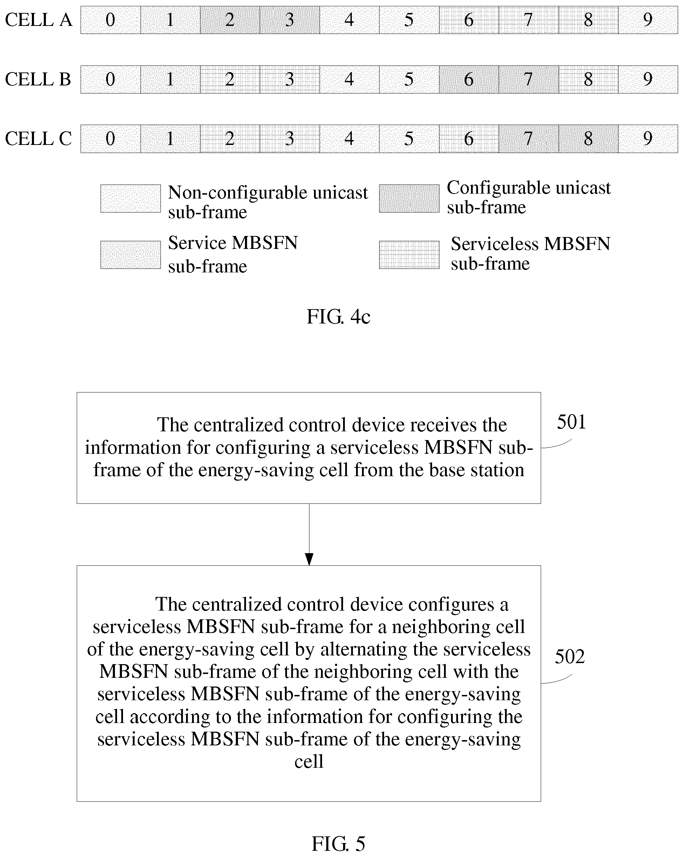

Specifically, as shown in FIG. 4c, eNB1 may configure sub-frame 2, sub-frame 3, and sub-frame 6 in cell C as serviceless MBSFN sub-frames, and configure sub-frame 7 and sub-frame 8 as configurable unicast sub-frames, according to the information for configuring the serviceless MBSFN sub-frames of cell A and cell B. In this case, the serviceless MBSFN sub-frames numbered 2, 3, and 6 in cell C partly alternate with the serviceless MBSFN sub-frames numbered 6, 7, and 8 in cell A, and the serviceless MBSFN sub-frames numbered 2, 3, and 8 in cell B, and the serviceless MBSFN sub-frames numbered 2, 3, and 6 in cell C.

Optionally, after step 301, step 3011 or step 3011' may also be included.

3011: When eNB1 of cell A detects that interference exceeds a preset threshold, eNB1 sends TOI information (for example, a TOI) to the eNB of the neighboring cell of cell A. After receiving the TOI information, eNB2 performs step 302.

3011': When cell A uses a high-interference sub-frame, eNB1 of cell A sends THII information (for example, THII) to the eNB of the neighboring cell of cell A. After receiving the THII information, eNB2 performs step 302.

Accordingly, after step 303, step 3031 and step 3031' may also be included.

3031: When eNB2 of cell B detects that the interference exceeds a preset threshold, eNB2 sends TOI information (for example, a TOI) to the eNB of the neighboring cell of cell B. After receiving the TOI information, eNB1 performs step 304.

3031': When cell B uses a high-interference sub-frame, eNB2 sends THII information (for example, THII) to the eNB of the neighboring cell. After receiving the THII information, eNB1 performs step 304.

Optionally, when the serviceless MBSFN sub-frames of the energy-saving cell change, the eNB of the energy-saving cell notifies the eNB of the neighboring cell of the change of configuration of the serviceless MBSFN sub-frames. The eNB of the neighboring cell of the energy-saving cell may configure the serviceless MBSFN sub-frames of the neighboring cell according to the change of the serviceless MBSFN sub-frames of the energy-saving cell. The change of the serviceless MBSFN sub-frames of the energy-saving cell includes: increasing or decreasing the serviceless MBSFN sub-frames of the energy-saving cell; and the decreasing of the serviceless MBSFN sub-frames of the energy-saving cell includes: sending, by the eNB of the energy-saving cell, the MBMS in the serviceless MBSFN sub-frames of the energy-saving cell, or configuring, by the eNB of the energy-saving cell, the serviceless MBSFN sub-frames of the energy-saving cell as unicast sub-frames or other service sub-frames. For example, when the serviceless MBSFN sub-frames in cell A decrease to zero, cell A quits an energy-saving state, and the serviceless MBSFN sub-frames of cell A are used for sending MBMS, or are configured as unicast sub-frames or other service sub-frames. In this case, eNB1 sends a notification message to eNB2 (and eNB1) of cell B and cell C to notify eNB2 (and eNB1) of the change of the serviceless MBSFN sub-frames of cell A. eNB1 and eNB2 may configure serviceless MBSFN sub-frames of cell C and cell B respectively according to the change of the serviceless MBSFN sub-frames of cell A.

In the method for configuring the energy-saving cell in this embodiment, the information for configuring the serviceless MBSFN sub-frames of the energy-saving cell is transmitted between eNBs, the configuration of the serviceless MBSFN sub-frames between neighboring cells is coordinated, and the serviceless MBSFN sub-frames of a cell alternate with the serviceless MBSFN sub-frames of the neighboring cells, thereby reducing interference between neighboring cells and improving stability of the system.

If the network node is a centralized control device, as shown in FIG. 5, the method for configuring an energy-saving cell includes the following steps:
501: The centralized control device receives the information for configuring a serviceless MBSFN sub-frame of the energy-saving cell from a base station.
502: The centralized control device configures a serviceless MBSFN sub-frame for a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

In practice, the centralized control device may be an OAM system, or an MCE, or another centralized control device capable of implementing step 501 and step 502.

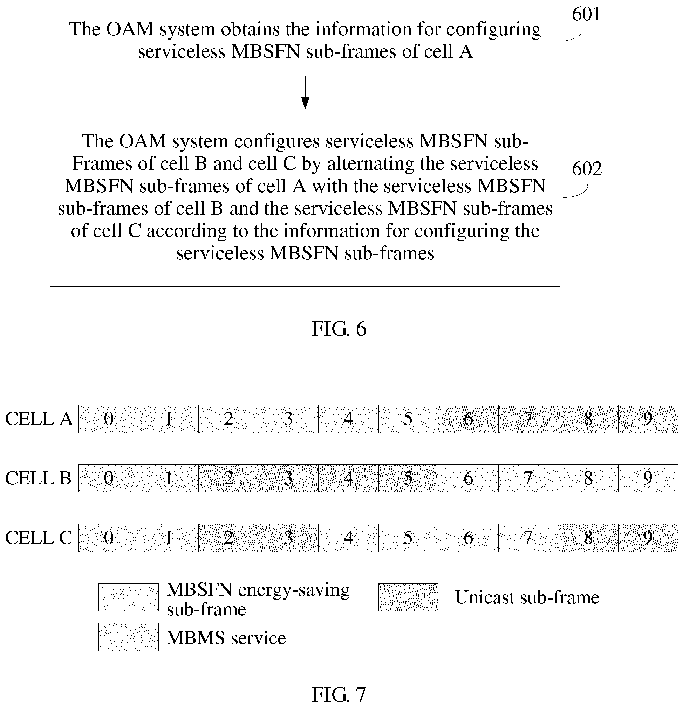

The following describes the method for configuring the energy-saving cell in detail, supposing that cell A and cell C are under the same base station, for example, eNB1, and cell B is under eNB2, as shown in FIG. 2. In this embodiment, an OAM system is taken as an example of the centralized control device. In this embodiment, cell A, cell B, and cell C are adjacent to one another; and cell A is an energy-saving cell for which serviceless MBSFN sub-frames are configured. As shown in FIG. 4a, in cell A, cell B, and cell C, sub-frame 0, sub-frame 4, sub-frame 5, and sub-frame 9 are non-configurable unicast sub-frames, and sub-frame 1 is a sub-frameservice MBSFN sub-frame. eNB1 configures sub-frame 6, sub-frame 7, and sub-frame 8 of cell A as serviceless MBSFN sub-frames, and configures sub-frame 2 and sub-frame 3 as configurable unicast sub-frames. As shown in FIG. 6, the method for configuring an energy-saving cell in this embodiment includes the following steps.

601: The OAM system obtains the information for configuring the serviceless MBSFN sub-frames of cell A.

Specifically, eNB1 transmits the information (such as "MBSFN sub-frame info") for configuring the serviceless MBSFN sub-frames of cell A to the OAM system through an itf-N interface to notify the OAM system that sub-frame 6, sub-frame 7, and sub-frame 8 in cell A are serviceless MBSFN sub-frames.

602: The OAM system configures serviceless MBSFN sub-frames of cell B and cell C by alternating the serviceless MBSFN sub-frames of cell A with the serviceless MBSFN sub-frames of cell B and the serviceless MBSFN sub-frames of cell C according to the information for configuring the serviceless MBSFN sub-frames.

Specifically, as shown in FIG. 4c, the OAM system may configure sub-frame 2, sub-frame 3, and sub-frame 8 in cell B as serviceless MBSFN sub-frames, configure sub-frame 6 and sub-frame 7 in cell B as configurable unicast sub-frames, configure sub-frame 2, sub-frame 3, and sub-frame 6 in cell C as serviceless MBSFN sub-frames, and configure sub-frame 7 and sub-frame 8 in cell C as configurable unicast sub-frames according to the information for configuring the serviceless MBSFN sub-frames of cell A. In this case, the serviceless MBSFN sub-frames numbered 6, 7, and 8 in cell A alternate with the serviceless MBSFN sub-frames numbered 2, 3, and 8 in cell B, and the serviceless MBSFN sub-frames numbered 2, 3, and 6 in cell C.

Optionally, after step 601, step 6011 or step 6011' may also be included.

6011: When eNB1 of cell A detects that the interference exceeds a preset threshold, eNB 1 sends TOI information (for example, a TOI) to the OAM system. After receiving the TOI information, the OAM system performs step 602.

6011': When cell A uses high-interference sub-frames, eNB1 sends THII information (for example, THII) to the OAM system. After receiving the THII information, the OAM system performs step 602.

Optionally, when the serviceless MBSFN sub-frames of cell A change, the OAM system receives a notification message sent by eNB1, where the notification message is used for indicating the change of the serviceless MBSFN sub-frames of cell A. The OAM system may configure the serviceless MBSFN sub-frames of cell B and cell C according to the change of configuration of the serviceless MBSFN sub-frames of cell A. The change of the serviceless MBSFN sub-frames of cell A includes: increasing or decreasing the serviceless MBSFN sub-frames of cell A. More specifically, the decreasing of the serviceless MBSFN sub-frames of cell A includes: sending an MBMS in the serviceless MBSFN sub-frames of cell A, or configuring the serviceless MBSFN sub-frames of cell A as unicast sub-frames or other service sub-frames.

In another embodiment, the OAM system in the foregoing embodiment may be replaced with an MCE, and accordingly, the itf-N interface is replaced with an M2 interface. Persons of ordinary skill in the art understand that the OAM system in the foregoing embodiment may be replaced with another device capable of implementing centralized control.

In the method for configuring the energy-saving cell in this embodiment, the centralized control device configures the serviceless MBSFN sub-frames of the neighboring cells, and therefore, the serviceless MBSFN sub-frames of a cell alternate with the serviceless MBSFN sub-frames of the neighboring cells, thereby reducing interference between neighboring cells and improving stability of the system.

In another embodiment, if the MBSFN sub-frames are not distinguished between the service MBSFN sub-frames and the serviceless MBSFN sub-frames, it is deemed that all MBSFN sub-frames are energy-saving MBSFN sub-frames. As shown in FIG. 7, it is assumed that cell A, cell B and cell C need to be configured, and sub-frame 0 and sub-frame 1 in cell A, cell B and cell C are MBMS sub-frames. If sub-frames 2-5 in cell A are configured as energy-saving MBSFN sub-frames and sub-frames 6-9 in cell A are configured as unicast sub-frames, it is appropriate to configure sub-frames 6-9 in cell B as energy-saving MBSFN sub-frames, configure sub-frames 2-5 in cell B as unicast sub-frames, configure sub-frames 4-7 in cell C as energy-saving MBSFN sub-frames, and configure sub-frame 2, sub-frame 3, sub-frame 8, and sub-frame 9 in cell C as unicast sub-frames. For detailed configuration method, reference may be made to the previous embodiment, and details will not be described herein again.

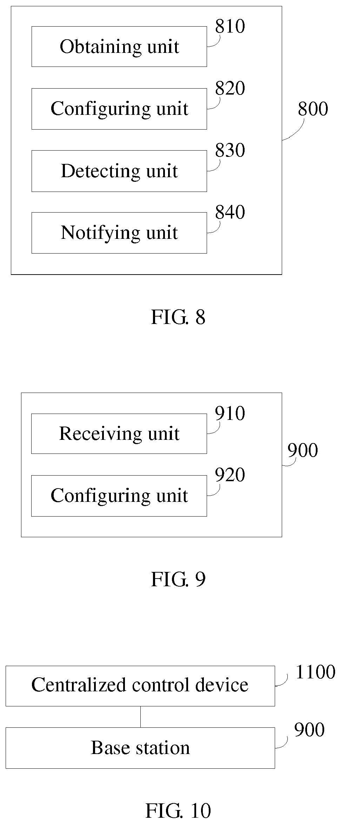

As shown in FIG. 8, a base station 800 provided in an embodiment of the present invention includes an obtaining unit 810 and a configuring unit 820.

The obtaining unit 810 is configured to obtain information for configuring a serviceless MBSFN sub-frame of an energy-saving cell; and the configuring unit 820 configures a serviceless MBSFN sub-frame of a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

Optionally, the obtaining unit 810 may receive the information for configuring the serviceless MBSFN sub-frame of the energy-saving cell through an X2 interface, or an S1 interface, or an M2 interface, or an itf-N interface.

Optionally, the configuring unit 820 is further configured to configure the serviceless MBSFN sub-frame of the neighboring cell of the energy-saving cell according to the received information for configuring the serviceless MBSFN sub-frame of the energy-saving cell after receiving TOI information and/or THII information sent by the base station of the energy-saving cell.

Optionally, when the base station 800 serves as a base station of the energy-saving cell, the base station may further include a detecting unit 830, which is configured to: send TOI information to the base station of the neighboring cell of the energy-saving cell when detecting that interference of the energy-saving cell exceeds a preset threshold, or send THII information to the base station of the neighboring cell of the energy-saving cell when detecting that the energy-saving cell uses a high-interference sub-frame.

Optionally, when the base station 800 serves as a base station of the energy-saving cell, the base station may further include a notifying unit 840, which is configured to send a notification message to the base station of the neighboring cell of the energy-saving cell when the serviceless MBSFN sub-frame of the energy-saving cell changes, where the notification message is used for indicating the change of the serviceless MBSFN sub-frame of the energy-saving cell. The change of the serviceless MBSFN sub-frame of the energy-saving cell includes: increasing or decreasing the serviceless MBSFN sub-frame of the energy-saving cell; and the decreasing of the serviceless MBSFN sub-frame of the energy-saving cell includes: sending an MBMS in the serviceless MBSFN sub-frame of the energy-saving cell, or configuring the serviceless MBSFN sub-frame of the energy-saving cell as a unicast sub-frame or other service sub-frame. When the serviceless MBSFN sub-frame in the energy-saving cell decrease to zero, the energy-saving cell quits an energy-saving state.

Optionally, when the base station 800 serves as a base station of the neighboring cell, the base station may further include a receiving unit, which is configured to receive the notification message sent by the energy-saving cell. In this case, the configuring unit 820 may be further configured to configure the serviceless MBSFN sub-frame of the neighboring cell according to the change of the serviceless MBSFN sub-frame indicated in the notification message.

The base station 800 provided in this embodiment can implement the method embodiment shown in FIG. 3. In the technical solution provided in this embodiment, the information for configuring the serviceless MBSFN sub-frame of the energy-saving cell is transmitted between base stations, the configuration of the serviceless MBSFN sub-frame between neighboring cells is coordinated, and the serviceless MBSFN sub-frame of a cell alternate with the serviceless MBSFN sub-frame of the neighboring cells, thereby reducing interference between neighboring cells and improving stability of the system.

As shown in FIG. 9, a centralized control device 900 provided in an embodiment of the present invention includes a receiving unit 910 and a configuring unit 920.

The receiving unit 910 is configured to receive information for configuring a serviceless MBSFN sub-frame of an energy-saving cell from a base station. The configuring unit 920 is configured to configure a serviceless MBSFN sub-frame for a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell received by the receiving unit 910.

Optionally, the centralized control device may be an OAM system, or an MCE, or another device capable of implementing centralized control. Persons skilled in the art understand that in some scenarios, the base station may also serve as a centralized control device to configure a serviceless MBSFN sub-frame for a cell under other base station.

Optionally, after receiving TOI information and/or THII information sent by the base station, the configuring unit 920 configures the serviceless MBSFN sub-frame of the neighboring cell of the energy-saving cell according to the information for configuring the serviceless MBSFN sub-frame of the energy-saving cell.

Optionally, the receiving unit 910 is further configured to receive a notification message sent by the base station of the energy-saving cell, where the notification message is used for indicating change of the serviceless MBSFN sub-frame of the energy-saving cell. The change of the serviceless MBSFN sub-frame of the energy-saving cell includes: increasing or decreasing the serviceless MBSFN sub-frame of the energy-saving cell; and the decreasing of the serviceless MBSFN sub-frame of the energy-saving cell includes: sending an MBMS in the serviceless MBSFN sub-frame of the energy-saving cell, or configuring the serviceless MBSFN sub-frame of the energy-saving cell as a unicast sub-frame or other service sub-frame. When the serviceless MBSFN sub-frame in the energy-saving cell decrease to zero, the energy-saving cell quits an energy-saving state.

Optionally, after the receiving unit 910 receives the notification message, the configuring unit 920 may further configure the serviceless MBSFN sub-frame of the neighboring cell according to the change of the serviceless MBSFN sub-frame indicated in the notification message.

In the technical solution provided in this embodiment, the centralized control device coordinates configuration of the serviceless MBSFN sub-frame between neighboring cells, and therefore, the serviceless MBSFN sub-frame of a cell alternate with the serviceless MBSFN sub-frame of the neighboring cells, thereby reducing interference between neighboring cells and improving stability of the system.

As shown in FIG. 10, an embodiment of the present invention provides a system for configuring an energy-saving cell. The system includes the centralized control device 900 shown in FIG. 9 and a base station 1100 of an energy-saving cell. For the structure and functions of the centralized control device 900, reference may be made to the embodiments described in the foregoing, and details will not be described herein again.

The base station 1100 of the energy-saving cell sends information for configuring a serviceless MBSFN sub-frame of the energy-saving cell to the centralized control device 900.

Optionally, the base station 1100 of the energy-saving cell is further configured to send TOI information to the centralized control device 900 after detecting that interference of the energy-saving cell exceeds a preset threshold, or sends THII information to the centralized control device 900 after detecting that the energy-saving cell uses a high-interference sub-frame.

Optionally, the base station 1100 of the energy-saving cell is further configured to send a notification message to the centralized control device 900 when the serviceless MBSFN sub-frame of the energy-saving cell changes, where the notification message is used for indicating the change of the serviceless MBSFN sub-frame of the energy-saving cell.

The change of the serviceless MBSFN sub-frame of the energy-saving cell includes: increasing or decreasing the serviceless MBSFN sub-frame of the energy-saving cell; and the decreasing of the serviceless MBSFN sub-frame of the energy-saving cell includes: sending an MBMS in the serviceless MBSFN sub-frame of the energy-saving cell, or configuring the serviceless MBSFN sub-frame of the energy-saving cell as a unicast sub-frame or other service sub-frame. When the serviceless MBSFN sub-frame in the energy-saving cell decrease to zero, the energy-saving cell quits an energy-saving state.

In the system for configuring an energy-saving cell in this embodiment, the centralized control device coordinates configuration of the serviceless MBSFN sub-frame between neighboring cells, and therefore, the serviceless MBSFN sub-frame of a cell alternate with the serviceless MBSFN sub-frame of the neighboring cells, thereby reducing interference between neighboring cells and improving stability of the system.

Item1. a method for configuring an energy-saving cell, comprising:
obtaining, by a network node, information for configuring a serviceless Multicast Broadcast Single Frequency Network (MBSFN) sub-frame of an energy-saving cell; and
configuring, by the network node, a serviceless MBSFN sub-frame of a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

Item 2. The method according to item 1, further comprising:
configuring, by the network node, the serviceless MBSFN sub-frame of the neighboring cell according to the information for configuring the serviceless MBSFN sub-frame of the energy-saving cell after receiving Time division interference Overload Indicator (TOI) information and/or Time division High Interference Indication (THII) information sent by a base station of the energy-saving cell.

Item 3. The method according to item 2, further comprising:
sending, by the base station of the energy-saving cell, the TOI information to the network node after detecting that interference exceeds a preset threshold, or sending the THII information to the network node if the energy-saving cell uses a high-interference sub-frame.

Item 4. The method according to item 1, further comprising:
sending, by a base station of the energy-saving cell, a notification message to the network node when the serviceless MBSFN sub-frame of the energy-saving cell changes, wherein the notification message is used for indicating the change of the serviceless MBSFN sub-frame of the energy-saving cell.

Item 5. The method according to item 4, wherein:
the change of the serviceless MBSFN sub-frame of the energy-saving cell comprises: increasing or decreasing the serviceless MBSFN sub-frame of the energy-saving cell; and
the decreasing of the serviceless MBSFN sub-frame of the energy-saving cell comprises: sending a Multicast Broadcast Media Service (MBMS) in the serviceless MBSFN sub-frame of the energy-saving cell, or configuring the serviceless MBSFN sub-frame of the energy-saving cell as a unicast sub-frame or other service sub-frame.

Item 6. The method according to any one of item 1-5, wherein:
the network node comprises: a centralized control device or a base station of the neighboring cell.

Item 7. The method according to item 6, wherein:
the centralized control device comprises: an Operation Administration Maintenance (OAM) system or a Multi-cell/multicast Coordination Entity (MCE).

Item 8. The method according to item 6, wherein:
when the network node is the base station of the neighboring cell, the step of the network node obtaining the information for configuring the serviceless MBSFN sub-frame of the energy-saving cell comprises:
obtaining, by the base station of the neighboring cell, the information for configuring the serviceless MBSFN sub-frame of the energy-saving cell through an X2 interface, or an S1 interface, or an M2 interface, or an itf-N interface.

Item 9. A base station, comprising:
an obtaining unit, configured to obtain information for configuring a serviceless Multicast Broadcast Single Frequency Network (MBSFN) sub-frame of an energy-saving cell; and
a configuring unit, configured to configure a serviceless MBSFN sub-frame of a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

Item 10. The base station according to item 9, wherein:
the obtaining unit is further configured to obtain the information for configuring the serviceless MBSFN sub-frame of the energy-saving cell through an X2 interface, or an S1 interface, or an M2 interface, or an itf-N interface.

Item 11. The base station according to item 9 or 10, wherein:
the configuring unit is further configured to configure the serviceless MBSFN sub-frame of the neighboring cell of the energy-saving cell according to the received information for configuring serviceless MBSFN sub-frame of the energy-saving cell after receiving Time division interference Overload Indicator (TOI) information and/or Time division High Interference Indication (THII) information sent by a base station of the energy-saving cell.

Item 12. The base station according to item 11, further comprising:
a detecting unit, configured to send TOI information to a base station of a neighboring cell of the energy-saving cell when detecting that an interference of the energy-saving cell exceeds a preset threshold, or send THII information to the base station of the neighboring cell of the energy-saving cell when detecting that the energy-saving cell uses a high-interference sub-frame.

Item 13. The base station according to item 9 or 10, further comprising:
a notifying unit, configured to send a notification message to the base station of the neighboring cell when a serviceless MBSFN sub-frame of the energy-saving cell changes, wherein the notification message is used for indicating the change of the serviceless MBSFN sub-frame of the energy-saving cell.

Item 14. The base station according to item 13, wherein:
the change of the serviceless MBSFN sub-frame of the energy-saving cell comprises: increasing or decreasing, by the configuring unit, the serviceless MBSFN sub-frame of the energy-saving cell; and
the decreasing, by the configuring unit, the serviceless MBSFN sub-frame of the energy-saving cell comprises: sending a Multicast Broadcast Media Service (MBMS) in the serviceless MBSFN sub-frame of the energy-saving cell, or configuring the serviceless MBSFN sub-frame of the energy-saving cell as a unicast sub-frame or other service sub-frame.

Item 15. A centralized control device, comprising:
a receiving unit, configured to receive information for configuring a serviceless Multicast Broadcast Single Frequency Network (MBSFN) sub-frame of an energy-saving cell from a base station; and
a configuring unit, configured to configure a serviceless MBSFN sub-frame for a neighboring cell of the energy-saving cell by alternating the serviceless MBSFN sub-frame of the neighboring cell with the serviceless MBSFN sub-frame of the energy-saving cell according to the information for configuring the serviceless MBSFN sub-frame of the energy-saving cell.

Item 16. The centralized control device according to item 15, wherein:
the centralized control device comprises: an Operation Administration Maintenance (OAM) system, and a Multi-cell/multicast Coordination Entity (MCE).

Item 17. The centralized control device according to item 15 or 16, wherein:
the configuring unit is further configured to configure the serviceless MBSFN sub-frame of the neighboring cell according to the information for configuring the serviceless MBSFN sub-frame of the energy-saving cell after receiving Time division interference Overload Indicator (TOI) information and/or Time division High Interference Indication (THII) information sent by the base station.

Item 18. A system for configuring an energy-saving cell,
comprising the centralized control device according to any one of claims 15-17 and a base station of the energy-saving cell, wherein:
the base station of the energy-saving cell is configured to send information for configuring a serviceless Multicast Broadcast Single Frequency Network (MBSFN) sub-frame of the energy-saving cell to the centralized control device.

Item 19. The system according to item 18, wherein:
the base station of the energy-saving cell is further configured to send Time division interference Overload Indicator (TOI) information to the centralized control device after detecting that interference of the energy-saving cell exceeds a preset threshold, or send Time division High Interference Indication (THII) information to the centralized control device after detecting that the energy-saving cell uses a high-interference sub-frame.

Item 20. The system according to item 18, wherein:
the base station of the energy-saving cell is further configured to send a notification message to the centralized control device when the serviceless MBSFN sub-frame of the energy-saving cell changes, wherein the notification message is used for indicating the change of the serviceless MBSFN sub-frame of the energy-saving cell.

Item 21. The system according to item 20, wherein:
the change of the serviceless MBSFN sub-frame of the energy-saving cell comprises: increasing or decreasing the serviceless MBSFN sub-frame of the energy-saving cell; and
the decreasing of the serviceless MBSFN sub-frame of the energy-saving cell comprises:
   sending a Multicast Broadcast Media Service (MBMS) in the serviceless MBSFN sub-frame of the energy-saving cell, or configuring the serviceless MBSFN sub-frame of the energy-saving cell as a unicast sub-frame or other service sub-frame.

Item 1. A method for configuring an energy-saving long term evolution, LTE, or LTE-advanced cell, characterized by:
obtaining (101; 301; 501; 601), by a network node (800; 900; 900, 1100), information for configuring a serviceless or energy-saving Multicast Broadcast Single Frequency Network, MBSFN, sub-frame of a radio frame of an energy-saving cell, wherein a serviceless MBSFN sub-frame does not transmit services; and
configuring (102; 302; 502; 602), by the network node (800; 900; 900, 1100), a serviceless or energy-saving MBSFN sub-frame of a neighboring cell of the energy-saving cell by alternating the serviceless or energy-saving MBSFN sub-frame of the neighboring cell with the serviceless or energy-saving MBSFN sub-frame of the energy-saving cell according to the information for configuring the serviceless or energy-saving MBSFN sub-frame of the energy-saving cell.

Item 2. The method according to item 1, wherein before the step of configuring (102; 302; 502; 602), by the network node (800; 900; 900, 1100), a serviceless or energy-saving MBSFN sub-frame of a neighboring cell, the method further comprises:
receiving, by the network node, Time division interference Overload Indicator, TOI, information and/or Time division High Interference Indication, THII, information sent by a base station (800) of the energy-saving cell.

Item 3. The method according to item 2, wherein the TOI information is sent by the base station (800; 900) of the energy-saving cell to the network node after an interference in the energy-saving cell exceeds a preset threshold, and/or the THII information is sent by the base station of the energy-saving cell to the network node if the energy-saving cell uses a high-interference sub-frame.

Item 4. The method according to item 1, wherein before the step of configuring, by the network node, a serviceless or energy-saving MBSFN sub-frame of a neighboring cell, the method further comprises:
receiving, by the network node (800; 900; 900, 1100), a notification message from the base station (800; 900) of the energy-saving cell, wherein the notification message is sent to the network node (800; 900; 900, 1100) when the serviceless or energy-saving MBSFN sub-frame of the energy-saving cell changes, and the notification message is used for indicating the change of the serviceless or energy-saving MBSFN sub-frame of the energy-saving cell.

Item 5. The method according to item 4, wherein:
the change of the serviceless or energy-saving MBSFN sub-frame of the energy-saving cell comprises: increasing or decreasing of the serviceless or energy-saving MBSFN sub-frame of the energy-saving cell; and
the decreasing of the serviceless or energy-saving MBSFN sub-frame of the energy-saving cell comprises: sending a Multicast Broadcast Media Service, MBMS, in the serviceless or energy-saving MBSFN sub-frame of the energy-saving cell, or configuring the serviceless or energy-saving MBSFN sub-frame of the energy-saving cell as a unicast sub-frame or other service sub-frame.

Item 6. The method according to any one of items 1-5, wherein:
the network node comprises: a centralized control device (900) or a base station (800) of the neighboring cell.

Item 7. The method according to item 6, wherein:
when the network node is the base station (800) of the neighboring cell, the step of the network node obtaining the information for configuring the serviceless or energy-saving MBSFN sub-frame of the energy-saving cell comprises:
obtaining (301), by the base station (800) of the neighboring cell, the information for configuring the serviceless or energy-saving MBSFN sub-frame of the energy-saving cell through an X2 interface, or an SI interface, or an M2 interface, or an itf-N interface.

Item 8. An energy-saving long term evolution, LTE, or LTE-A base station (800), characterized by:
an obtaining unit (810), configured to obtain information (301) for configuring a serviceless or energy-saving Multicast Broadcast Single Frequency Network, MBSFN, sub-frame of a radio frame of an energy-saving cell, wherein a serviceless MBSFN sub-frame does not transmit services; and
a configuring unit (820), configured to configure (302) a serviceless or energy-saving MBSFN sub-frame of a neighboring cell of the energy-saving cell by alternating the serviceless or energy-saving MBSFN sub-frame of the neighboring cell with the serviceless or energy-saving MBSFN sub-frame of the energy-saving cell according to the information for configuring the serviceless or energy-saving MBSFN sub-frame of the energy-saving cell.

Item 9. The base station (800) according to Item 8, wherein:
the obtaining unit (810) is further configured to obtain the information for configuring the serviceless or energy-saving MBSFN sub-frame of the energy-saving cell through an X2 interface, or an SI interface, or an M2 interface, or an itf-N interface.

Item 10. The base station (800) according to item 8 or 9, wherein:
the configuring unit (820) is further configured to configure the serviceless or energy-saving MBSFN sub-frame of the neighboring cell of the energy-saving cell according to the obtained information for configuring the serviceless or energy-saving MBSFN sub-frame of the energy-saving cell after receiving Time division interference Overload Indicator, TOI, information and/or Time division High Interference Indication, THII, information sent by a base station of the energy-saving cell.

Item 11. The base station (800) according to any one of items 8-10, wherein the base station (800) has a first energy-saving cell, the base station (800) further comprises:
a detecting unit (830), configured to send TOI information to a base station of a neighboring cell of the first energy-saving cell when detecting that an interference of the first energy-saving cell exceeds a preset threshold, or send THII information to the base station of the neighboring cell of the first energy-saving cell when detecting that the first energy-saving cell uses a high-interference sub-frame; and/or
a notifying unit (840), configured to send a notification message to the base station of the neighboring cell of the first energy-saving cell when a serviceless or energy-saving MBSFN sub-frame of the first energy-saving cell changes, wherein the notification message is used for indicating the change of the serviceless or energy-saving MBSFN sub-frame of the first energy-saving cell.

Item 12. A centralized control device (900), characterized by:
a receiving unit (910), configured to receive (501) information for configuring a serviceless or energy-saving Multicast Broadcast Single Frequency Network, MBSFN, sub-frame of a radio frame of an energy-saving long term evolution, LTE, or LTE advanced cell from a base station, wherein a serviceless MBSFN sub-frame does not transmit services; and
a configuring unit (920), configured to configure (502) a serviceless or energy-saving MBSFN sub-frame for a neighboring cell of the energy-saving cell by alternating the serviceless or energy-saving MBSFN sub-frame of the neighboring cell with the serviceless or energy-saving MBSFN sub-frame of the energy-saving cell according to the information for configuring the serviceless or energy-saving MBSFN sub-frame of the energy-saving cell.

Item 13. The centralized control device (900) according to item 12, wherein:
the centralized control device (900) comprises: an Operation Administration Maintenance, OAM, system, and a Multi-cell/multicast Coordination Entity, MCE.

Item 14. The centralized control device (900) according to item 12 or 13, wherein:
the configuring unit (920) is further configured to configure the serviceless or energy-saving MBSFN sub-frame of the neighboring cell according to the information for configuring the serviceless or energy-saving MBSFN sub-frame of the energy-saving cell after receiving Time division interference Overload Indicator, TOI, information and/or Time division High Interference Indication, THII, information sent by the base station.

Item 15. A system for configuring a cell, characterized by: the centralized control device (900) according to any one of items 12-14 and a base station of the energy-saving cell, wherein:
the base station of the energy-saving cell is configured to send information for configuring a serviceless or energy-saving Multicast Broadcast Single Frequency Network, MBSFN, sub-frame of the energy-saving cell to the centralized control device.

Persons of ordinary skill in the art should understand that all or part of the steps of the method of the present invention may be implemented by a computer program instructing relevant hardware. The program may be stored in a computer readable storage medium. When the program is run, the program executes the method specified in any embodiment of the present invention. The storage medium may be a magnetic disk, an optical disk, Read-Only Memory (ROM), or Random Access Memory (RAM).

Disclosed in the foregoing are the objectives, technical solution and benefits of the embodiments of the present invention. It should be understood that, the above descriptions are merely exemplary embodiments of the present invention.

## Claims

1. A method for a Long Term Evolution, LTE, or Long Term Evolution-Advanced, LTE-A system for configuring a sub-frame of a neighboring cell of a cell, comprising:
receiving (101; 301), by a base station (800) of the neighboring cell of the cell, information for configuring a multicast broadcast single frequency network, MBSFN, sub-frame of the neighboring cell of the cell in a radio frame from a base station of the cell, wherein the information for configuring the MBSFN sub-frame of the neighboring cell in the radio frame is a sub-frame number of the MBSFN sub-frame of the cell;
configuring (102; 302), by the base station of the neighboring cell, according to the received information for configuring the MBSFN sub-frame of the neighboring cell of the cell in the radio frame, the MBSFN sub-frame of the neighboring cell of the cell so that the configured MBSFN sub-frame of the neighboring cell never or only partly overlaps the MBSFN sub-frame of the cell in the same radio frame;
wherein the method step of configuring further comprises:
the sub-frame number of the MBSFN sub-frame of the neighboring cell is at least partly not equal to the sub-frame number of the MBSFN sub-frame of the cell in the same radio frame.

2. The method according to claim 1, after the configuration of the base station of the neighboring cell, the method further comprising:
sending (303), by the base station of the neighboring cell, information for configuring the MBSFN sub-frame of the neighboring cell to the base station of the cell, wherein the information for configuring the MBSFN sub-frame of the neighboring cell is used for the base station of the cell to configure the MBSFN sub-frame of the cell.

3. The method according to claim 1 or 2, the configuration of the base station of the neighboring cell, comprising:
configuring (3011, 3011'), by the base station of the neighboring cell, the MBSFN sub-frame of the neighboring cell by never or partly overlapping the MBSFN sub-frame of the cell in the radio frame, after the base station of the neighboring cell receives Time division interference Overload Indicator, TOI, information and/or Time division High Interference Indication, THII, information from the base station of the cell.

4. The method according to any one of claims 1-3, the method further comprising:
receiving, by the base station of the neighboring cell, a notification message for indicating a configuration change of the MBSFN sub-frame of the cell; and
configuring, by the base station of the neighboring cell, the MBSFN sub-frame of the neighboring cell according to the configuration change.

5. The method according to any one of claims 1-4, wherein both the MBSFN sub-frame of the neighboring cell and the MBSFN sub-frame of the cell are a serviceless MBSFN sub-frame; wherein the serviceless MBSFN sub-frame is an idle sub-frame.

6. The method according to any one of claims 1-5, wherein common reference signals, CRSs of the MBSFN sub-frame of the neighboring cell or the cell are less than CRSs of a unicast sub-frame, and when no CRS of the MBSFN sub-frame of the neighboring cell or the cell needs to be sent, a power amplifier in a corresponding packet switched domain is shut down to save power.

7. A Long Term Evolution, LTE, or Long Term Evolution-Advanced, LTE-A base station of a neighboring cell of a cell, wherein the base station of the neighboring cell is configured to:
receive information for configuring an multicast broadcast single frequency network, MBSFN, sub-frame of the neighboring cell of the cell in a radio frame from a base station of the cell, wherein the information for configuring the MBSFN sub-frame of the neighboring cell in the radio frame is the sub-frame number of the MBSFN sub-frame of the neighboring cell; and
configure, according to the received information for configuring the MBSFN sub-frame of the neighboring cell of the cell in the radio frame, the MBSFN sub-frame of the neighboring cell of the cell so that the configured MBSFN sub-frame of the neighboring cell never or only partly overlaps the MBSFN sub-frame of the cell in the same radio frame;
wherein the configuration of the MBSFN sub-frame of the neighboring cell comprising:
a sub-frame number of the MBSFN sub-frame of the neighboring cell is at least partly not equal to a sub-frame number of the MBSFN sub-frame of the cell in the same radio frame.

8. The base station of the neighboring cell according to claim 7, wherein the base station of the neighboring cell is further configured to:
send information for configuring the MBSFN sub-frame of the neighboring cell to the base station of the cell after the configuration of the base station of the neighboring cell, wherein the information for configuring the MBSFN sub-frame of the neighboring cell is used for the base station of the cell to configure the MBSFN sub-frame of the cell.

9. The base station of the neighboring cell according to any one of claims 7-8, wherein the base station of the neighboring cell is configured to configure the MBSFN sub-frame of the neighboring cell never or partly overlapping the MBSFN sub-frame of the cell in the radio frame, comprising:
the base station of the neighboring cell is configured to configure the MBSFN sub-frame of the neighboring cell by never or partly overlapping the MBSFN sub-frame of the cell in the radio frame, after the base station of the neighboring cell receives Time division interference Overload Indicator, TOI, information and/or Time division High Interference Indication, THII, information from the base station of the cell.

10. The base station of the neighboring cell according to any one of claims 7-9, wherein the base station is further configured to:
receive a notification message for indicating a configuration change of the MBSFN sub-frame of the cell; and
configure the MBSFN sub-frame of the neighboring cell according to the configuration change.

11. The base station of the neighboring cell according to any one of claims 7-10, wherein both the MBSFN sub-frame of the neighboring cell and the MBSFN sub-frame of the cell are a serviceless MBSFN sub-frame; wherein the serviceless MBSFN sub-frame is an idle sub-frame.

12. The base station of the neighboring cell according to any one of claim 7-11, wherein common reference signals, CRSs of the MBSFN sub-frame of the neighboring cell or the cell are less than CRSs of a unicast sub-frame, and when no CRS of the MBSFN sub-frame of the neighboring cell or the cell needs to be sent, a Power Amplifier, PA, in the corresponding Packet Switched, PS, domain is shut down to save power.

## Patentansprüche

1. Verfahren für ein "Long Term Evolution"(LTE)- oder "Long Term Evolution-Advanced"(LTE-A)-System zum Konfigurieren eines Unterrahmens einer Nachbarzelle einer Zelle, umfassend:
Empfangen (101; 301), durch eine Basisstation (800) der Nachbarzelle der Zelle, von Informationen zum Konfigurieren eines "Multicast Broadcast Single Frequency Network"(MBSFN)-Unterrahmens der Nachbarzelle der Zelle in einem Funkrahmen von einer Basisstation der Zelle, wobei die Informationen zum Konfigurieren des MBSFN-Unterrahmens der Nachbarzelle in dem Funkrahmen eine Unterrahmennummer des MBSFN-Unterrahmens der Zelle sind;
Konfigurieren (102; 302), durch die Basisstation der Nachbarzelle, gemäß den empfangenen Informationen zum Konfigurieren des MBSFN-Unterrahmens der Nachbarzelle der Zelle in dem Funkrahmen, des MBSFN-Unterrahmens der Nachbarzelle oder der Zelle, sodass der konfigurierte MBSFN-Unterrahmen der Nachbarzelle den MBSFN-Unterrahmen der Zelle in demselben Funkrahmen zu keinem Zeitpunkt oder nur teilweise überlappt;
wobei der Verfahrensschritt des Konfigurierens ferner Folgendes umfasst:
die Unterrahmennummer des MBSFN-Unterrahmens der Nachbarzelle ist zumindest teilweise nicht gleich der Unterrahmennummer des MBSFN-Unterrahmens der Zelle in demselben Funkrahmen.

2. Verfahren nach Anspruch 1, nach der Konfiguration der Basisstation der Nachbarzelle, das Verfahren ferner umfassend:
Senden (303), durch die Basisstation der Nachbarzelle, von Informationen zum Konfigurieren des MBSFN-Unterrahmens der Nachbarzelle zu der Basisstation der Zelle, wobei die Informationen zum Konfigurieren des MBSFN-Unterrahmens der Nachbarzelle für die Basisstation der Zelle verwendet werden, um den MBSFN-Unterrahmen der Zelle zu konfigurieren.

3. Verfahren nach Anspruch 1 oder 2, die Konfiguration der Basisstation der Nachbarzelle umfassend:
Konfigurieren (3011, 3011'), durch die Basisstation der Nachbarzelle, des MBSFN-Unterrahmens der Nachbarzelle durch Überlappen zu keinem Zeitpunkt oder teilweises Überlappen des MBSFN-Unterrahmens der Zelle in dem Funkrahmen, nachdem die Basisstation der Nachbarzelle "Time division interference Overload Indicator"(TOI)-Informationen und/oder "Time division High Interference Indication"(THII)-Informationen von der Basisstation der Zelle empfängt.

4. Verfahren nach einem der Ansprüche 1-3, das Verfahren ferner umfassend:
Empfangen, durch die Basisstation der Nachbarzelle, einer Mitteilungsnachricht zum Anzeigen einer Konfigurationsänderung des MBSFN-Unterrahmens der Zelle; und
Konfigurieren, durch die Basisstation der Nachbarzelle, des MBSFN-Unterrahmens der Nachbarzelle gemäß der Konfigurationsänderung.

5. Verfahren nach einem der Ansprüche 1-4, wobei sowohl der MBSFN-Unterrahmen der Nachbarzelle als auch der MBSFN-Unterrahmen der Zelle ein dienstloser MBSFN-Unterrahmen sind; wobei der dienstlose MBSFN-Unterrahmen ein inaktiver Unterrahmen ist.

6. Verfahren nach einem der Ansprüche 1-5, wobei gemeinsame Referenzsignale (Common Reference Signals, CRSs) des MBSFN-Unterrahmens der Nachbarzelle oder der Zelle weniger als CRSs eines Unicast-Unterrahmens sind, und, wenn kein CRS des MBSFN-Unterrahmens der Nachbarzelle oder der Zelle gesendet werden muss, ein Leistungsverstärker in einer entsprechenden paketvermittelten Domäne abgeschaltet wird, um Strom zu sparen.

7. "Long Term Evolution"(LTE)- oder "Long Term Evolution-Advanced"(LTE-A)-Basisstation einer Nachbarzelle einer Zelle, wobei die Basisstation der Nachbarzelle zu Folgendem konfiguriert ist:
Empfangen von Informationen zum Konfigurieren eines "Multicast Broadcast Single Frequency Network"(MBSFN)-Unterrahmens der Nachbarzelle der Zelle in einem Funkrahmen von einer Basisstation der Zelle, wobei die Informationen zum Konfigurieren des MBSFN-Unterrahmens der Nachbarzelle in dem Funkrahmen die Unterrahmennummer des MBSFN-Unterrahmens der Nachbarzelle sind; und
Konfigurieren, gemäß den empfangenen Informationen zum Konfigurieren des MBSFN-Unterrahmens der Nachbarzelle der Zelle in dem Funkrahmen, des MBSFN-Unterrahmens der Nachbarzelle der Zelle, sodass der konfigurierte MBSFN-Unterrahmen der Nachbarzelle den MBSFN-Unterrahmen der Zelle in demselben Funkrahmen zu keinem Zeitpunkt oder nur teilweise überlappt;
wobei die Konfiguration des MBSFN-Unterrahmens der Nachbarzelle Folgendes umfasst:
eine Unterrahmennummer des MBSFN-Unterrahmens der Nachbarzelle ist zumindest teilweise nicht gleich einer Unterrahmennummer des MBSFN-Unterrahmens der Zelle in demselben Funkrahmen.

8. Basisstation der Nachbarzelle nach Anspruch 7, wobei die Basisstation der Nachbarzelle ferner zu Folgendem konfiguriert ist:
Senden von Informationen zum Konfigurieren des MBSFN-Unterrahmens der Nachbarzelle zu der Basisstation der Zelle nach der Konfiguration der Basisstation der Nachbarzelle, wobei die Informationen zum Konfigurieren des MBSFN-Unterrahmens der Nachbarzelle für die Basisstation der Zelle verwendet werden, um den MBSFN-Unterrahmen der Zelle zu konfigurieren.

9. Basisstation der Nachbarzelle nach einem der Ansprüche 7-8, wobei die Basisstation der Nachbarzelle dazu konfiguriert ist, den MBSFN-Unterrahmen der Nachbarzelle zu konfigurieren, wobei der MBSFN-Unterrahmen der Zelle in dem Funkrahmen zu keinem Zeitpunkt oder teilweise überlappt wird, umfassend:
die Basisstation der Nachbarzelle ist dazu konfiguriert, den MBSFN-Unterrahmen der Nachbarzelle durch Überlappen zu keinem Zeitpunkt oder teilweises Überlappen des MBSFN-Unterrahmens der Zelle in dem Funkrahmen zu konfigurieren, nachdem die Basisstation der Nachbarzelle "Time division interference Overload Indicator"(TOI)-Informationen und/oder "Time division High Interference Indication"(THII)-Informationen von der Basisstation der Zelle empfängt.

10. Basisstation der Nachbarzelle nach einem der Ansprüche 7-9, wobei die Basisstation ferner zu Folgendem konfiguriert ist:
Empfangen einer Mitteilungsnachricht zum Anzeigen einer Konfigurationsänderung des MBSFN-Unterrahmens der Zelle; und
Konfigurieren des MBSFN-Unterrahmens der Nachbarzelle gemäß der Konfigurationsänderung.

11. Basisstation der Nachbarzelle nach einem der Ansprüche 7-10, wobei sowohl der MBSFN-Unterrahmen der Nachbarzelle als auch der MBSFN-Unterrahmen der Zelle ein dienstloser MBSFN-Unterrahmen sind; wobei der dienstlose MBSFN-Unterrahmen ein inaktiver Unterrahmen ist.

12. Basisstation der Nachbarzelle nach einem der Ansprüche 7-11, wobei gemeinsame Referenzsignale (Common Reference Signals, CRSs) des MBSFN-Unterrahmens der Nachbarzelle oder der Zelle weniger als CRSs eines Unicast-Unterrahmens sind, und, wenn kein CRS des MBSFN-Unterrahmens der Nachbarzelle oder der Zelle gesendet werden muss, ein Leistungsverstärker (PA) in einer entsprechenden paketvermittelten (PS) Domäne abgeschaltet wird, um Strom zu sparen.

## Revendications

1. Procédé destiné à un système d'évolution à long terme, LTE, ou d'évolution à long terme avancée, LTE-A permettant de configurer une sous-trame d'une cellule voisine d'une cellule, consistant à :
recevoir (101 ; 301), grâce à une station de base (800) de la cellule voisine de la cellule, des informations permettant de configurer une sous-trame d'un réseau à fréquence unique de diffusion multi-diffusion, MBSFN, de la cellule voisine de la cellule dans une trame radio provenant d'une station de base de la cellule, les informations permettant de configurer la sous-trame MBSFN de la cellule voisine dans la trame radio représentant un numéro de sous-trame de la sous-trame MBSFN de la cellule ;
configurer (102 ; 302), grâce à la station de base de la cellule voisine, en fonction des informations reçues permettant de configurer la sous-trame MBSFN de la cellule voisine de la cellule dans la trame radio, la sous-trame MBSFN de la cellule voisine de la cellule de sorte que la sous-trame MBSFN configurée de la cellule voisine ne chevauche jamais ou en partie seulement la sous-trame MBSFN de la cellule dans la même trame radio ;
dans lequel l'étape du procédé consistant à configurer comprend en outre :
le numéro de sous-trame de la sous-trame MBSFN de la cellule voisine n'est au moins en partie pas égal au numéro de sous-trame de la sous-trame MBSFN de la cellule dans la même trame radio.

2. Procédé selon la revendication 1, après la configuration de la station de base de la cellule voisine, le procédé consistant en outre à :
envoyer (303), grâce à la station de base de la cellule voisine, des informations permettant de configurer la sous-trame MBSFN de la cellule voisine à la station de base de la cellule, les informations permettant de configurer la sous-trame MBSFN de la cellule voisine étant utilisées pour la station de base de la cellule afin de configurer la sous-trame MBSFN de la cellule.

3. Procédé selon la revendication 1 ou 2, la configuration de la station de base de la cellule voisine, consistant à :
configurer (3011, 3011'), grâce à la station de base de la cellule voisine, la sous-trame MBSFN de la cellule voisine en ne chevauchant jamais ou en partie la sous-trame MBSFN de la cellule dans la trame radio, après que la station de base de la cellule voisine a reçu les informations d'indicateur de surcharge d'interférence par répartition dans le temps, TOI, et/ou les informations d'indication d'interférence élevée par répartition dans le temps, THII, de la station de base de la cellule.

4. Procédé selon l'une quelconque des revendications 1 à 3, le procédé consistant en outre à :
recevoir, grâce à la station de base de la cellule voisine, un message de notification pour indiquer un changement de configuration de la sous-trame MBSFN de la cellule ; et
configurer, par la station de base de la cellule voisine, la sous-trame MBSFN de la cellule voisine en fonction du changement de configuration.

5. Procédé selon l'une quelconque des revendications 1 à 4, dans lequel à la fois la sous-trame MBSFN de la cellule voisine et la sous-trame MBSFN de la cellule sont une sous-trame MBSFN sans service ; la sous-trame MBSFN sans service étant une sous-trame inactive.

6. Procédé selon l'une quelconque des revendications 1 à 5, dans lequel des signaux de référence communs, CRS, de la sous-trame MBSFN de la cellule voisine ou de la cellule sont inférieurs aux CRS d'une sous-trame d'unidiffusion, et lorsqu'aucun CRS de la sous-trame MBSFN de la cellule voisine ou de la cellule n'a besoin d'être envoyé, un amplificateur de puissance dans un domaine à commutation de paquets correspondant est arrêté pour économiser de l'énergie.

7. Station de base d'évolution à long terme, LTE, ou d'évolution à long terme avancée, LTE-A d'une cellule voisine d'une cellule, la station de base de la cellule voisine étant conçue pour :
recevoir des informations permettant de configurer une sous-trame d'un réseau à fréquence unique de diffusion multi-diffusion, MBSFN, de la cellule voisine de la cellule dans une trame radio provenant d'une station de base de la cellule, les informations permettant de configurer la sous-trame MBSFN de la cellule voisine dans la trame radio représentant le numéro de sous-trame de la sous-trame MBSFN de la cellule voisine ; et
configurer, en fonction des informations reçues permettant de configurer la sous-trame MBSFN de la cellule voisine de la cellule dans la trame radio, la sous-trame MBSFN de la cellule voisine de la cellule de sorte que la sous-trame MBSFN configurée de la cellule voisine ne chevauche jamais ou en partie seulement la sous-trame MBSFN de la cellule dans la même trame radio ;
dans laquelle la configuration de la sous-trame MBSFN de la cellule voisine comprend :
un numéro de sous-trame de la sous-trame MBSFN de la cellule voisine n'est au moins en partie pas égal à un numéro de sous-trame de la sous-trame MBSFN de la cellule dans la même trame radio.

8. Station de base de la cellule voisine selon la revendication 7, dans laquelle la station de base de la cellule voisine est conçue en outre pour :
envoyer des informations permettant de configurer la sous-trame MBSFN de la cellule voisine à la station de base de la cellule après la configuration de la station de base de la cellule voisine, les informations permettant de configurer la sous-trame MBSFN de la cellule voisine étant utilisées pour la station de base de la cellule afin de configurer la sous-trame MBSFN de la cellule.

9. Station de base de la cellule voisine selon l'une quelconque des revendications 7 à 8, dans laquelle la station de base de la cellule voisine est conçue pour configurer la sous-trame MBSFN de la cellule voisine en ne chevauchant jamais ou en partie la sous-trame MBSFN de la cellule dans la trame radio, comprenant :
la station de base de la cellule voisine est conçue pour configurer la sous-trame MBSFN de la cellule voisine en ne chevauchant jamais ou en partie la sous-trame MBSFN de la cellule dans la trame radio, après que la station de base de la cellule voisine a reçu les informations d'indicateur de surcharge d'interférence par répartition dans le temps, TOI et/ou les informations d'indication d'interférence élevée par répartition dans le temps, THII, de la station de base de la cellule.

10. Station de base de la cellule voisine selon l'une quelconque des revendications 7 à 9, dans laquelle la station de base est conçue en outre pour :
recevoir un message de notification pour indiquer un changement de configuration de la sous-trame MBSFN de la cellule ; et
configurer la sous-trame MBSFN de la cellule voisine en fonction du changement de configuration.

11. Station de base de la cellule voisine selon l'une quelconque des revendications 7 à 10, dans laquelle à la fois la sous-trame MBSFN de la cellule voisine et la sous-trame MBSFN de la cellule sont une sous-trame MBSFN sans service ; la sous-trame MBSFN sans service étant une sous-trame inactive.

12. Station de base de la cellule voisine selon l'une quelconque des revendications 7 à 11, dans laquelle des signaux de référence communs, CRS, de la sous-trame MBSFN de la cellule voisine ou de la cellule sont inférieurs aux CRS d'une sous-trame d'unidiffusion, et lorsqu'aucun CRS de la sous-trame MBSFN de la cellule voisine de la cellule ou de la cellule n'a besoin d'être envoyé, un amplificateur de puissance, PA, dans le domaine à commutation de paquets, PS, correspondant est arrêté pour économiser de l'énergie.
